Europäisches Patentamt

European Patent Office

Office européen des brevets

(19)

(11) Veröffentlichungsnummer: **0 225 989**
**B1**

(12) **EUROPÄISCHE PATENTSCHRIFT**

(45) Veröffentlichungstag der Patentschrift: **08.08.90**

(21) Anmeldenummer: **86114418.6**

(22) Anmeldetag: **17.10.86**

(51) Int. Cl.⁵: **A 23 G 9/16, A 23 G 9/30**

(54) **Vorrichtung zum Herstellen von Speiseeis, Milchshake, Sorbet, gefrorenen Süssspeisen u. dgl. jeweils aus einem pumpfähigen Ansatz.**

(30) Priorität: **18.12.85 DE 3544802**

(43) Veröffentlichungstag der Anmeldung:
**24.06.87 Patentblatt 87/26**

(45) Bekanntmachung des Hinweises auf die
Patenterteilung:
**08.08.90 Patentblatt 90/32**

(84) Benannte Vertragsstaaten:
**AT BE CH DE FR GB IT LI NL SE**

(56) Entgegenhaltungen:
**FR-A-1 497 273**
**FR-A-2 222 617**
**US-A-1 692 964**
**US-A-1 765 315**
**US-A-1 765 710**
**US-A-3 183 681**

(73) Patentinhaber: **LUMEN GmbH Nährmittel- und
Maschinenfabrik
Petzmannsberg 11
D-8650 Kulmbach (DE)**

(72) Erfinder: **Menzel, Waldemar
Eichenstrasse 11
D-8650 Kulmbach-Burghaig (DE)**

(74) Vertreter: **Rau, Manfred, Dr. Dipl.-Ing. et al
Rau & Schneck, Patentanwälte Königstrasse 2
D-8500 Nürnberg 1 (DE)**

EP 0 225 989 B1

Courier Press, Leamington Spa, England.

**Beschreibung**

Die Erfindung betrifft eine Vorrichtung nach dem Oberbegriff des Anspruches 1.

Bei einer derartigen, aus der DE-PS 23 13 715 (entsprechend US-PS 3 930 535) bekannten Vorrichtung erfolgt das - üblicherweise täglich nach Betriebsschluß erfolgende - Pasteurisieren des im Gefrier-Zylinder und im Vorratsbehälter befindlichen Ansatzes dadurch, daß mit der am Gefrier-Zylinder angebrachten Heizung dessen Innenwand auf eine kurz oberhalb der Verdampfungstemperatur von Wasser liegende Temperatur erhitzt wird, wodurch ein Teil des im Ansatz enthaltenen Wassers verdampft wird und durch den mit großem Querschnitt ausgebildeten Zuführkanal in den Vorratsbehälter steigt. Durch diesen aufsteigenden Dampf wird auch der im Vorratsbehälter befindliche Ansatz auf Pasteurisierungstemperatur erhitzt. Bei dieser bekannten Vorrichtung erfolgt eine zufriedenstellende Pasteurisierung des im Vorratsbehälter und im Gefrier-Zylinder befindlichen Ansatzes. Ein Anbrennen des Ansatzes an der Wand des Vorratsbehälters wird - im Gegensatz zu noch älteren Ausführungen - vermieden. Wegen der lokal notwendigen Erhitzung bis auf etwa 100°C erfolgen aber insbesondere in milchhaltigen Ansätzen Geschmacksveränderungen; insbesondere nimmt der Ansatz einen karamelartigen Geschmack an.

Der Erfindung liegt die Aufgabe zugrunde, eine Vorrichtung der gattungsgemäßen Art so auszugestalten, daß beim Pasteurisieren einerseits ein bakteriologisch einwandfreies Ergebnis erzielt und andererseits Geschmacksveränderungen vermieden werden.

Diese Aufgabe wird erfindungsgemäß durch die Merkmale im Kennzeichnungsteil des Anspruches 1 gelöst Durch die erfindungsgemäßen Maßnahmen wird ein Umwälzen des gesamten Inhalts des Kühl- oder Gefrier-Zylinders und des Vorratsbehälters beim Pasteurisieren ermöglicht Dadurch daß die Zuführung des Ansatzes vom Vorratsbehälter her - in bekannter Weise - an einem Ende des Zylinders erfolgt und die Rückführung dieses Ansatzes vom anderen Ende des Zylinders her über den während des normalen Betriebes mittels des Ventils geschlossenen Verbindungskanal erfolgt, wird der gesamte Ansatz ständig umgewälzt. Die Verweilzeit jeweils an einem bestimmten Bereich der Innenwand des Zylinders ist sehr gering, so daß ein Anbrennen ausgeschlossen ist. Durch das ständige Umwälzen ist der Wärmeübergang im Bereich der Innenwand des Zylinders sehr hoch, so daß die Wand des Zylinders nur auf eine Temperatur erhitzt zu werden braucht, die kurz oberhalb der Pasteurisierungstemperatur von etwa 72°C liegt. Lokale Überhitzungen im Ansatz kommen nicht vor, so daß auch lokal die Pasteurisierungstemperatur von 72°C nicht überschritten wird. Geschmacksveränderungen können somit ausgeschlossen werden.

Anspruch 2 gibt eine Ausgestaltung des die Wandtemperatur begrenzenden Thermostaten an.

Zum Umwälzen des Ansatzes beim Pasteurisieren kann es ausreichend sein, lediglich das Rühr- und Schabewerk einzusetzen, das auch eine Pumpwirkung in Richtung auf das Zapfventil ausübt. Besonders vorteilhaft ist es aber, wenn die Maßnahmen nach Anspruch 3 vorgesehen sind, da hierdurch eine höhere Umwälzleistung erreichbar ist.

Aus der DE-PS 21 39 917 (entsprechend US-PS 3 811 494) ist es bekannt, bei einer Vorrichtung zum Herstellen von Speiseeis mit einem Vorratsbehälter und einem räumlich von diesem getrennten Gefrier-Zylinder zusätzlich zu einer den Vorratsbehälter mit einer Einlaufkammer des Zylinders verbindenden Vorlaufleitung noch eine ebenfalls in die Einlaufkammer einmündende Rücklaufleitung vorzusehen, so daß ein ständiges oder periodisches Umpumpen des Ansatzes zwischen Vorratsbehälter und Gefrier-zylinder möglich ist. Zweck dieser Maßnahme ist es, eine Keimvermehrung in der Vorlaufleitung während Betriebspausen zu vermeiden. Hierdurch ist es auch möglich, mit nur einer, beispielsweise am Gefrierzylinder vorgesehenen Heizung den gesamten Vorrat an Ansatz, beispielsweise Eismix, zu pasteurisieren. Der Grundgedanke, den gesamten Inhalt des Gefrier-Zylinders definiert mit in einen Umwälzprozeß einzubeziehen, ist aus dieser Veröffentlichung nicht bekannt.

Aus der US-PS 3 665 722 ist eine Vorrichtung zur Herstellung von teilweise gefrorenen Getränken bekannt. Hierbei ist ein Vorratsbehälter mit einem unterhalb von diesem angeordneten Gefrier-Zylinder über eine Leitung verbunden. Der Gefrier-Zylinder ist über eine Rücklaufleitung mit einem Magnetventil mit dem Vorratsbehälter verbunden. Dieses Magnetventil öffnet, wenn die Flüssigkeit im Vorratszylinder eine bestimmte Temperatur überschritten hat. Diese Leitungsverbindungen dienen also dazu, eine Kühlung des Getränks im Vorratsbehälter sicherzustellen. Der Inhalt des Gefrierzylinders ist nicht in das Umlaufsystem intetriert. Probleme einer Geschmacksveränderung beim pasteurisieren spielen hierbei keine Rolle.

Weitere Vorteile, Merkmale und Einzelheiten der Erfindung ergeben sich aus der nachfolgenden Beschreibung von Ausführungsbeispielen anhand der Zeichnungen. Es zeigt

Fig. 1 eine Vorrichtung gemäß der Erfindung in schematischer Darstellung im vertikalen Längsschnitt,

Fig. 2 einen Querschnitt gemäß der Schnittlinie II-II durch Fig. 1 und

Fig. 3 eine abgewandelte Ausführungsform der Erfindung in schematischer Darstellung im vertikalen Längsschnitt.

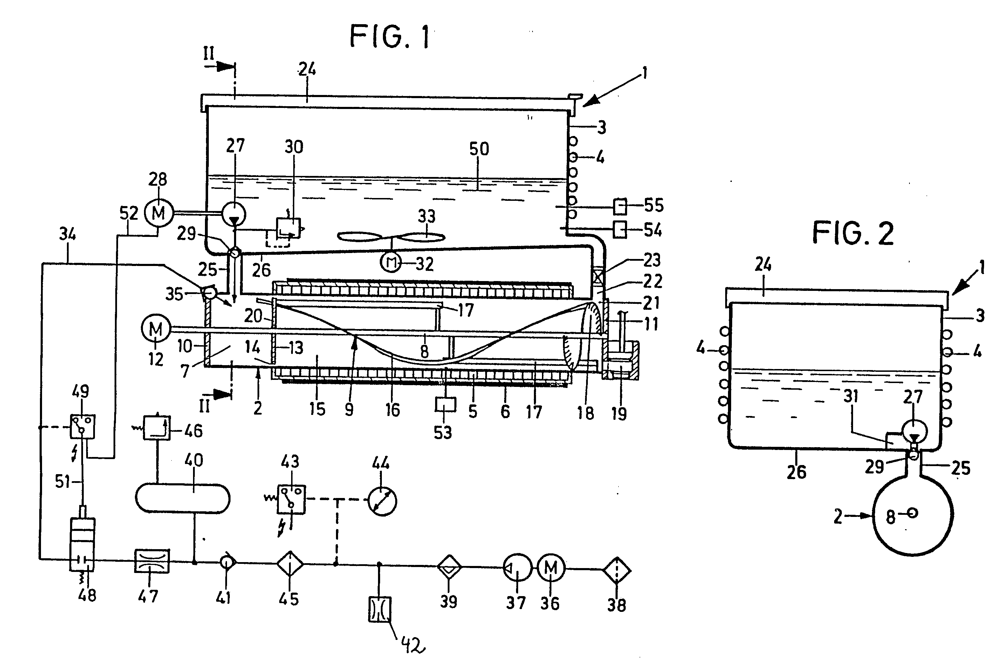

Wie aus den Figuren 1 und 2 hervorgeht, ist - in allgemein üblicher Weise - ein Vorratsbehälter 1 oberhalb eines horizontalen Kühl- oder Gefrier-Zylinders 2 angeordnet und bildet mit diesem weitgehend eine Einheit. Die Seitenwände 3 des Vorratsbehälters 1 sind mit einem Kühlrohr 4 versehen, das etwa schraubenförmig um die Seitenwände 3 verläuft und nur schematisch dargestellt ist.

Der Zylinder 2 ist mit einem Kühlmantel 5 umgeben, durch den ein Kältemittel gepumpt werden kann. Der Kühlmantel 5 selber ist wiederum von einem Heizmantel 6 umgeben. Kühlmantel 5 und Heizmantel 6 erstrecken sich weitgehend über die volle Länge des Zylinders 2 mit Ausnahme eines an einem in Fig. 1 linken - Ende befindlichen Bereichs, in dem sich eine Einlaufkammer 7 des Zylinders 2 befindet. Der Zylinder 2 wird koaxial von einer Welle 8 eines Rühr- und Schabewerks 9 durchsetzt, die in endseitigen Stirnwänden l0, 11 des Zylinders 2 drehbar gelagert und aus einem - in Fig. 1 linken - Ende herausgeführt ist. Das Rühr- und Schabewerk 9 wird auf dieser Seite von einem Elektro-Motor 12 angetrieben.

Auf der Welle 8 ist eine Scheibe 13 angebracht, die nur einen sehr schmalen Spalt 14 zur Wand des Zylinders 2 freiläßt. Diese Scheibe 13 trennt die Einlaufkammer 7 von der eigentlichen Kühl- und/oder Gefrier-Kammer 15 im Zylinder 2, die von dem Kühlmantel 5 und dem Heizmantel 6 umgeben ist. In der Kammer 15 ist auf der Welle 8 eine schraubenlinienförmige Rührwendel 16 befestigt. An der Welle 8 sind außerdem zwei an der Innenwand des Zylinders 2 anliegende Schabeklingen 17 angebracht, die ständig den Eisansatz von der Innenwand des Zylinders 2 abschaben. Im Anschluß an die Rührwendel 16 ist auf der Welle 8 noch eine kurzgängige Schnecke 18 mit einem Schneckengang befestigt, die eine gewisse Stauwirkung gegenüber der Rührwendel 16 ausübt. Vor der dem Motor 12 entgegengesetzten Stirnwand 11 ist ein Zapfventil 19 angebracht. In der eine Zwischenwand bildenden Scheibe 13 kann eine die Einlaufkammer 7 mit der Kammer 15 verbindende Durchlaßöffnung 20 ausgebildet sein.

Die Kühl- und/oder Gefrier-Kammer 15 ist in dem im Zapfventil 19 bzw. der zugeordneten Stirnwand 11 benachbarten Endbereich 21 über einen Verbindungskanal 22 mit dem Vorratsbehälter 1 verbunden. In diesem durch ein Rohr gebildeten Verbindungskanal 22 ist ein Ventil 23 angeordnet.

Der mittels eines Deckels 24 verschließbare Vorratsbehälter 1 ist mit der Einlaufkammer 7 des Zylinders 2 über einen Zuführkanal 25 verbunden, dem eine am Boden 26 des Vorratsbehälters 1 in diesem angeordnete Pumpe 27 vorgeordnet ist. Diese Pumpe 27 wird von einem Elektro-Motor 28 angetrieben. Bei der Pumpe 27 kann es sich um eine Zahnradpumpe handeln. Ihr ist im Bereich des Zuführkanals 25 ein Rückschlagventil 29 vorgeordnet, das einen Rückfluß von Flüssigkeit aus dem Zylinder 2 bzw. dessen Einlaufkammer 7 in den Vorratsbehälter 1 verhindert.

Des weiteren ist die Pumpe 27 mit einem Überdruckventil 30 versehen, das öffnet, wenn der Gegendruck von der Einlaufkammer 7 her einen vorgegebenen Wert überschreitet. In diesem Fall wird dann die aus dem Vorratsbehälter 1 in die Einlaufkammer 7 zu fördernde Flüssigkeit im Kurzschluß wieder in den Vorratsbehälter 1 gegeben. Solche technischen Ausführungen von Pumpen sind handelsüblich.

Die Pumpe 27 weist einen Ansaugstutzen 31 auf, dessen offenes Ende im Bereich des Bodens 26 des Vorratsbehälters 1 ist, so daß im Vorratsbehälter 1 keine토träume entstehen.

Am Boden 26 des Vorratsbehälters 1 ist ein mittels eines Elektro-Motors 32 angetriebener Rührer 33 angeordnet, der die im Vorratsbehälter 1 befindliche Flüssigkeit ständig umwälzt.

Über eine Luftleitung 34 wird in den oberen Bereich der Einlaufkammer 7 Luft eingeführt. Um zu verhindern, daß Flüssigkeit und/oder Luft aus der Einlaufkammer 7 in die Luftleitung 34 zurückströmen kann, ist in dieser ein Rückschlagventil 35 vorgesehen, das beispielsweise durch ein sogenanntes Lippenventil gebildet sein kann. Der Luftleitung 34 wird Druckluft von einem durch einen Elektro-Motor 36 angetriebenen Kompressor 37 zugeführt, dem ein Luftfilter 38 vorgeordnet ist. Dem Kompressor ist ein Druckluftentfeuchter 39 nachgeordnet.

Weiterhin ist in der Luftleitung 34 ein Druckluftvorratsbehälter 40 angeordnet, zwischen dem und dem Kompressor 37 ein Rückschlagventil 41 angeordnet ist. Zwischen dem Kompressor 37 und dem Rückschlagventil 41 ist weiterhin ein Auslaß-Drosselventil 42 angeordnet, durch das ständig etwas Druckluft ausströmt. Wegen des Rückschlagventils 41 kann aber keine Druckluft aus dem Druckluftvorratsbehälter 40 zum Drosselventil 42 zurückströmen. Ebenfalls zwischen Kompressor 37 und Rückschlagventil 41 ist in der Luftleitung 34 ein Druckwächter 43 angeordnet, der jeweils den Kompressor 37 einschaltet, wenn ein Mindestdruck in der Luftleitung 34 zwischen Kompressor 37 und Rückschlagventil 41 unterschritten wird. Dieser Mindestdruck kann beispielsweise bei 1,7 bar liegen. Der Kompressor schaltet wieder ab, wenn der Druck einen vorgebbaren Maximaldruck von beispielsweise 2,0 bar überschreitet. Der Luftdruck kann visuell mittels eines Druckmeßgeräts 44 überwacht werden. Dem Rückschlagventil 41 ist ebenfalls noch ein Druckluft-Sterilfilter 45 vorgeordnet. Am Druckluftvorratsbehälter 40 ist ein Druckbegrenzungsventil 46 angeordnet.

In der Luftleitung 34 ist zwischen dem Druckluftvorratsbehälter 40 und dem Rückschlagventil 35 ein Drosselventil 47 und ein Magnet-Ventil 48 angeordnet. Außerdem ist zwischen dem Magnet-Ventil 48 und dem Rückschlagventil 35 ein Druckwächter 49 vorgesehen.

Die vorstehend beschriebene Ausführung arbeitet wie folgt:

Es wird davon ausgegangen, daß sich im Vorratsbehälter sogenannter Eismix 50, d.h. ein flüssiger Speiseeisansatz, befindet, und daß im Zylinder 2 hieraus unter gleichzeitigem Lufteinschlag Speiseeis hergestellt wird.

Der Eismix 50 wird mittels der Pumpe 27 in die Einlaufkammer 7 des Zylinders 2 gepumpt, und zwar abhängig vom Druck, der dort herrscht. Da - abgesehen von der instationären Anfahrphase - der Druck im Zylinder 2 sich nur ändert, wenn Speiseeis-Portionen mittels des Zapfventils 19 entnommen werden, wird also die Pumpe 27 immer während oder nach der Entnahme einer Speiseeis-Portion eingeschaltet.

Die zur Auflockerung des Speiseeises benötigte Luft wird über die Luftleitung 34 zugeführt. Die pro Zeiteinheit durch die Luftleitung 34 zuzuführende Luftmenge wird an dem Drosselventil 47 eingestellt.

Üblicherweise kann die Einstellung so erfolgen, daß zwischen 0,8 und 2,7 l/min Luft in die Einlaufkammer gedrückt werden. Da die Leistung der pumpe 27 pro Zeiteinheit konstant ist und beispielsweise 2,5 l/min beträgt, kann das Volumenverhältnis von Eismix und Luft, die pro Minute zugeführt werden, sehr genau auf einem vorgegebenen Wert gehalten werden.

Wenn durch Entnahme einer Speiseeis-Portion der Druck im Zylinder 2 absinkt, dann sinkt der Druck auch in der Leitung 34 zwischen dem Rückschlagventil 35 und dem Magnet-Ventil 48 ab, so daß der Druckwächter 49 diesen Druckabfall registriert. Sinkt der Druck unter einen vorgegebenen Wert von beispielsweise 1,2 bar, dann wird über eine Steuerleitung 51 ein Signal zum Öffnen des Magnet-Ventils 48 und über eine Steuerleitung 52 ein Signal zum Einschalten des Motors 28 und der Pumpe 27 gegeben. Es werden dann also gleichzeitig im vorgegebenen Mengenverhältnis Luft und Eismix in die Einlaufkammer 7 des Zylinders 2 gefördert. Wenn der Druck im Zylinder 2 wieder einen vorgegebenen Höchstwert von beispielsweise 1,5 bar erreicht hat, werden über entsprechende Signale vom Druckwächter 49 das Magnet-Ventil 48 geschlossen und der Motor 28 der Pumpe 27 abgeschaltet. Dieser Vorgang wiederholt sich ständig, wenn Speiseeis-Portionen aus dem Zapfventil 19 entnommen werden.

Der Vorratsbehälter 1 ist drucklos; der darin gelagerte Eismix wird bei einer Lagertemperatur von ca. 2°C kühlgehalten und periodisch vom Rührer 33 umgewälzt, um eine gleichmäßige Temperatur innerhalb des Eismixes sicherzustellen.

Wie sich aus dem Vorstehenden ergibt, ist der Zylinder 2 immer mit Eismix bzw. fertigem Speiseeis gefüllt, unabhängig davon, ob im Vorratsbehälter 1 wenig oder viel Eismix 50 vorhanden ist. Wenn üblicherweise nach dem täglichen Betriebsschluß der noch im Vorratsbehälter 1 vorhandene Eismix 50 und das im Zylinder 2 vorhandene Speiseeis pasteurisiert werden sollen, wird die Druckluftzufuhr durch generelles Schließen des Magnet-Ventils 48 unterbunden und das Ventil 23 im Verbindungskanal 22 geöffnet. Gleichzeitig werden das Rühr- und Schabewerk 9 und die Pumpe 27 in Betrieb gesetzt. Außerdem werden die Kühlung über das Kühlrohr 4 und den Kühlmantel 5 abgeschaltet und die Heizung durch den Heizmantel 6 eingeschaltet. Während des Pasteuriervorganges wird der Heizmantel 6 über einen die Temperatur der Innenwand des Zylinders 2 erfassenden Thermostaten 53 geregelt. Der Eismix wird mittels der Rührwendel 16 in Richtung Zapfventil gefördert und von dort mittels der Schnecke 18, die während des Betriebes zum Ausdrücken der Speiseeis-portionen durch das Zapfventil 19 dient, durch den geöffneten Verbindungskanal 22 in den Vorratsbehälter 1 zurückgefördert. Von hier wird der Eismix mittels der Pumpe 27 wieder in die Einlaufkammer 7 zurückgefördert. Es wird also ein ständiger Kreislauf des Eismixes zwischen Vorratsbehälter 1 und Zylinder 2 erreicht, wobei alle Wandbereiche des Zylinders 2 bestrichen werden. Da der Eismix mittels des Rührund Schabewerks 9 und insbesondere mittels der Schabeklingen 17 im Zylinder stark verwirbelt wird, erfolgt eine gute Wärmeübertragung von der mittels des Heizmantels 6 beheizten Fläche des Zylinders 2 auf den Eismix. Wenn der Eismix zum Pasteurisieren auf etwa 72°C erhitzt werden soll, ist es daher ausreichend, wenn die Temperatur der Innenwand des Zylinders 2 mittels des Thermostaten 53 auf einer Temperatur von 75 bis 80°C gehalten wird. Damit ist sichergestellt, daß der Eismix nicht an der Innenwand des Zylinders 2 anbrennt und somit keinen karamelartigen Geschmack annimmt. Sobald der gesamte Eismix 50 die Pasteurisierungstemperatur erreicht hat, was über einen im Vorratsbehälter 1 angebrachten Thermostaten 54 erfaßt wird, wird der Heizmantel 6 abgeschaltet, wobei diese Abschaltung gesteuert über eine nichtdargestellte Zeituhr verzögert erfolgen kann, um eine wirksame Keimabtötung im Eismix 50 sicherzustellen.

Anschließend wird die in der Zeichnung nichtdargestellte Kälteanlage wieder eingeschaltet und der Eismix 50 über das Kühlrohr 4 und den Kühlmantel 5 auf Lagertemperatur von 2°C heruntergekühlt. Das Erreichen dieser Temperatur wird über einen im Vorratsbehälter 1 angebrachten Thermostaten 55 überwacht.

Es ist möglich, zum Pasteurisieren die Drehzahl der Pumpe 27 zu verdoppeln, um den Mixumlauf zu vergrößern. Die Menge, die pro Zeiteinheit zwischen Zylinder 2 und Vorratsbehälter 1 umgewälzt wird, wird ausschließlich durch die Leistung der Pumpe 27 bestimmt.

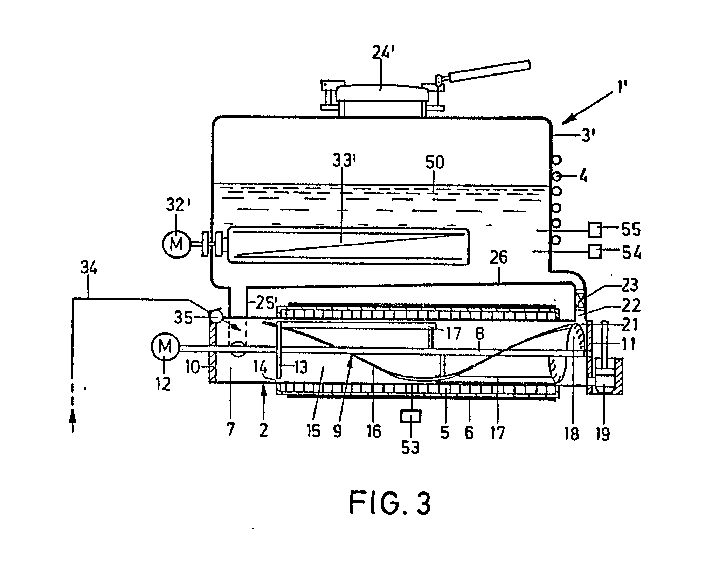

Bei der Ausführungsform nach Fig. 3 sind mit dem Ausführungsbeispiel nach Fig. 1 und 2 gleiche Teile -mit der jeweils selben Bezugsziffer versehen. Konstruktiv andere, aber funktionell im Prinzip gleiche Teile sind mit der jeweils gleichen Bezugsziffer mit einem hochgesetzten ' versehen. Insoweit wird von einer detaillierten Beschreibung Abstand genommen.

Die Vorrichtung nach Fig. 3 weist einen druckfesten Vorratsbehälter 1' auf, der durch einen druckfesten, luftdicht schließenden Deckel 24' verschlossen ist.

Im Vorratsbehälter 1' ist ein walzenförmiger Rührer 33' angeordnet, der von einem Elektro-Motor 32' antreibbar ist.

Aus dem Vorratsbehälter 1' mündet ein Zuführkanal 25' in die Einlaufkammer 7 des Zylinders 2, wobei dieser Zuführkanal 25' durch einen Rohrkrümmer verhältnismäßig großen Querschnitts gebildet wird, der etwa in Höhe der Welle 8 des Rührund Schabewerks 9 in die Einlaufkammer mündet. Durch diesen Zuführkanal 25' kann die über die Luftleitung 34 zugeführte Druckluft auch in den Vorratsbehälter 1' aufsteigen, weshalb dieser luftdicht und druckfest ausgebildet sein muß. Die Druckluftzuführung kann in konventioneller Weise erfolgen, wie dies beispielsweise in der DE-PS 12 77 877 (entsprechend US-PS 3 402 567) dargestellt und beschrieben ist, worauf es hier nicht ankommt.

Die Umwälzung des Eismixes beim Pasteurisieren erfolgt ausschließlich mittels des Rühr- und Schabewerks 9 einschließlich der Schnecke 18.

Zum Pasteurisieren wird also das Ventil 23 im Verbindungskanal 22 geöffnet, wodurch in der angesprochenen Weise die Umwälzung des Eismixes erfolgt. Der Rücklauf erfolgt frei durch den Zuführkanal 25'. Die Temperatursteuerung und die Beendigung des Pasteurisierungsvorgangs erfolgt wie beim vorherigen Ausführungsbeispiel.

Anstelle von Eismix können auch andere Ansätze, beispielsweise für Milchshake-Getränke, Sorbet oder gefrorene Süßspeisen eingesetzt werden, soweit diese Ansätze pumpfähig, also flüssig sind.

## Patentansprüche

1. Vorrichtung zum Herstellen von Speiseeis, Milchshake, Sorbet, gefrorenen Süßspeisen o. dgl. jeweils aus einem pumpfähigen Ansatz, bestehend aus einem Vorratsbehälter (1, 1') für den Ansatz und einem mit diesem über einen Zuführkanal (25, 25') verbundenen Kühl- oder Gefrier-Zylinder (2), in dem ein drehantreibbares Rühr- und Schabewerk (9) angeordnet ist, wobei der Zuführkanal (25, 25') in eine an einem Ende des Zylinders (2) befindliche Einlaufkammer (7) einmündet, wobei am anderen Ende des Zylinders (2) ein Zapfventil (19) vorgesehen ist, wobei nur der Zylinder (2) mit einer Heizung (Heizmantel 6) zum Pasteurisieren des Ansatzes versehen ist, wobei ein Thermostat (53) zur Begrenzung der Wandtemperatur des Zylinders (2) vorgesehen ist, und wobei Einrichtungen zum Transport des Ansatzes von der Einlaufkammer (7) zum Zapfventil (19) vorgesehen sind, dadurch gekennzeichnet, daß zwischen Vorratsbehälter (1, 1') und Zylinder (2) ein mit einem Ventil (23) absperrbarer Verbindungskanal (22) vorgesehen ist, der aus dem dem Zapfventil (19) benachbarten Endbereich (21) des Zylinders (2) ausmündet.

2. Vorrichtung nach Anspruch 1, dadurch gekennzeichnet, daß der die Wandtemperatur des Zylinders (2) begrenzende Thermostat (53) derart ausgebildet ist, daß er die Wandtemperatur auf 75°C bis 80°C begrenzt.

3. Vorrichtung nach Anspruch 1, dadurch gekennzeichnet, daß die Einrichtung zum Transport des Ansatzes (Eismix 50) durch eine dem Zuführkanal (25) vorgeordnete, im Vorratsbehälter (1) angeordnete Pumpe (27) gebildet ist.

4. Vorrichtung nach Anspruch 1, dadurch gekennzeichnet, daß der Kühl- oder Gefrier-zylinder (2) unterhalb des Vorratsbehälters (1, 1') angeordnet ist.

## Revendications

1. Appareil pour la fabrication de glace comestible, de milk-shake, de sorbet, de desserts congelés ou analogues, dans chaque cas à partir d'un mélange de base susceptible de pompage, comprenant un réservoir (1, 1') pour le mélange, et, relié au réservoir par l'intermédiaire d'un canal d'alimentation (25, 25'), un cylindre de refroidissement ou de congélation (2) dans lequel est monté un ensemble mélangeur-racleur (9) pouvant être entraîné en rotation, le canal d'alimentation (25, 25') débouchant dans une enceinte d'entrée (7) située à l'une des extrémités du cylindre (2), un robinet de soutirage (19) étant prévu à l'autre extrémité du cylindre (2), seul le cylindre (2) étant pourvu d'un dispositif de chauffage (enveloppe de chauffe 6) pour la pasteurisation du mélange, un thermostat étant prévu pour limiter la température de la paroi du cylindre (2), et des dispositifs étant prévus pour véhiculer le mélange de l'enceinte d'entrée (7) vers le robinet de soutirage (19), appareil caractérisé en ce qu'il est prévu entre le réservoir (1, 1') et le cylindre (2), un canal de liaison (22) pouvant être obturé par une soupape (23), et prenant naissance dans la zone d'extrémité (21) du cylindre (2), située au voisinage du robinet de soutirage (19).

2. Appareil selon la revendication 1, caractérisé en ce que le thermostat (53) limitant la température de la paroi du cylindre (2), est conçu de manière à limiter la température de paroi à une valeur de 75 à 80°C.

3. Appareil selon la revendication 1, caractérisé en ce que le dispositif pour véhiculer le mélange (mélange pour glace 50) est constitué par une pompe (27) précédant le canal d'alimentation (25) et agencée dans le réservoir (1).

4. Appareil selon la revendication 1, caractérisé en ce que le cylindre de refroidissement ou de congélation (2) est agencé en-dessous du réservoir (1, 1').

## Claims

1. Apparatus for the preparation of ice cream, milkshakes, sorbet, frozen desserts, and the like, in each case from a pumpable starting mixture, comprising a storage container (1, 1') for the starting mixture and a cylinder for cooling or freezing (2) communicating with the storage container via a supply conduit (25, 25'), in which cylinder a rotatably drivable stirring and scraping mechanism (9) is disposed, the supply conduit (25, 25') discharging into an inlet chamber (7) located on one end of the cylinder (2), a discharge valve (19) being located on the other end of the cylinder (2), only the cylinder (2) being surrounded by a heater (heating jacket 6) for pasteurizing the starting mixture, a thermostat (53) being provided for limiting the wall temperature of the cylinder (2), and means being provided for transporting the starting mixture from the inlet chamber (7) to the discharge valve (19), characterized in that a connecting conduit (22), which can be blocked by a valve (23) and which discharges from the end region (21) of the cylinder (2) adjacent the discharge valve (19), is provided between the storage container (1, 1') and the cylinder (2).

2. Apparatus as defined by claim 1, characterized in that the thermostat (53) limiting the wall temperature of the cylinder (2) is designed such that it limits the wall temperature to from 75°C to 80°C.

3. Apparatus as defined by claim 1, characterized in that the means for transporting the starting mixture (ice cream mix 50) is formed by a pump (27) disposed in the storage container (1) and preceding the supply conduit (25).

4. Apparatus as defined by claim 1, characterized in that the cooling or freezing cylinder (2) is disposed below the storage container (1, 1').

# FIG. 1

# FIG. 2

EP 0 225 989 B1

FIG. 3